Europäisches Patentamt

European Patent Office

Office européen des brevets

(19)

(11) Publication number: **0 375 794**
**A1**

## (12) EUROPEAN PATENT APPLICATION

(21) Application number: **88121680.8**

(51) Int. Cl.⁵: **G06F 15/00, G06F 13/42**

(22) Date of filing: **24.12.88**

(43) Date of publication of application:
**04.07.90 Bulletin 90/27**

(84) Designated Contracting States:
**DE FR GB IT**

(71) Applicant: **International Business Machines**
**Corporation**
**Old Orchard Road**
**Armonk, N.Y. 10504(US)**

(72) Inventor: **Döttling, Gerhard, Dipl.-Ing.**
**Karlstrasse 22**
**D-7405 Dettenhausen(DE)**

(74) Representative: **Jost, Ottokarl, Dipl.-Ing.**
**IBM Deutschland GmbH Patentwesen und**
**Urheberrecht Schönaicher Strasse 220**
**D-7030 Böblingen(DE)**

(54) Method of synchronizing signals which are generated on different chips having on-chip clocking systems with different speed.

(57) When data have to be transferred from a faster chip to a slower one, e.g. from one bus controller BCU to another SBA/CS the BCU indicates valid data on the bus interconnecting the two chips by activating a data valid signal TAG UP. To comply with the bus protocol the SBA must synchronize the asynchronous TAG UP with the clock cycle of the BCU. Therefor a synchronization circuit SC is provided which generates a BCU Data valid signal BDV which latches data from the bus into a register A. As for further processing the CS must have access to these data it is required that TAG UP is synchronized with the clock cycle of the CS. The SC generates for this purpose the CS data valid signal CDV which is used to load the data from register A to a register B for further processing by the CS.

FIG. 3

# Method Of Synchronizing Signals Which Are Generated On Different Chips Having On-chip Clocking Systems With Different Speed.

The invention relates to a method of synchronizing signals which are generated within chips having on-chip clocking systems with different speed for a transfer of data from a first to a second chip.

Modern trends in computer system design tend to common hardware building blocks which form the fundamental components of computer systems. In most cases these common hardware building blocks are single VLSI chip devices which represent processors, memory management units, input-/output controllers and/or bus adapters etc., which are difficult to produce.

Manufacturing problems mainly arise from the irregular structure or topology of high density logic chips as compared with the very regular structures of memory chips. Therefore, high density logic chips are expensive unless they can be produced in high volumes. A high volume production, however, has the disadvantage that many charges are required to produce the needed number of chips bearing the same part number. Because of unavoidable variations and anomalies in the chip production processes, the physical parameters or properties of the chips produced differ from charge to charge.

In the design of computer systems formed by interconnections of common building blocks (chips of a chip set) performance differences caused by different progation delays in the various chips are very obstructive. High volume production of chip sets, however, can nevertheless be achieved by using chip sets not only in a dedicated type of computer systems but in a more general way. A pre-requisite for a multi-usage of a chip set is a high flexibility in the domain of input-/output bus controllers (I/O bus controllers). Single-chip bus controllers which are members of the chip sets have clocking systems of their own. Caused by the above mentioned differences of the processing speed co-operating chips might have the off-chip signals normally asynchronous and have different phase lengths. In order to guaranty proper inter-chip communication special measures have to be taken.

So it is the object of this invention to provide a solution for synchronizing asynchronous signals generated within chips having on-chip clocking systems which are different in speed. Mainly single-chip I/O bus controllers which have to interconnect the various levels of I/O busses which need to be synchronized.

The synchronization problem is solved by the invention which refers to a method of synchronizing asynchronous signals which are generated on different chips having on-chip clocking systems with different speed for a transfer of data from a first to a second chip. The invention is characterized in that

the cycles of different clocking systems (BCU clock, CS clock) have a fixed phase relationship and a fixed cycle ration (e.g. 1:1, 2:1, 3:2,...),

the transmitting chip (BCU) indicates valid data for transmission by sending a data valid signal (TAG UP) to a synchronization circuit (SC),

the synchronization circuit synchronizes the asynchronous data valid signal with the clock cycle (C/B clock BCU) of the transmitting chip and generates a first synchronization signal (BDV),

the first synchronization signal is used to latch the data on a bus (14, 14a) connecting the chips into a first register (REG A) on the receiving chip in coincidence with the clock cycle of the transmitting chip,

the synchronization circuit further synchronizes the data valid signal with the clock cycle (C/B clock CS) of the receiving chip and generates a second synchronization signal (CDV),

the second synchronization signal is used to finally access the data in the first register and to latch these data in a second register (REG B) on the receiving chip in coincidence with the clock cycle of the receiving chip and

the second register is used to provide the data under control of the clock cycles of the receiving chip for further processing.

Further features and advantageous embodiments can be taken from the subclaims.

So the invention offers the advantage of synchronizing I/O bus controllers at modest expenditures.

Further benefits and advantages of the invention will become apparent from a consideration of the following detailed description given with reference to the accompanying drawings which specify and show preferred embodiments of the invention.

Fig. 1 is a block diagram illustrating a computer system which is formed by various chips of a suitable chip set,

Fig. 2 is a block diagram illustrating part of the computer system of Fig. 1,

Fig. 3 is a block diagram showing a general view of the synchronization circuitry used within the computer system of Figs. 1 or 2,

Fig. 4 is a block diagram showing the synchronization circuitry of Fig. 3 in more detail, and

Figs. 5, 6 and 7 are flow charts illustrating the operation of the synchronization circuitry of Fig.

4.

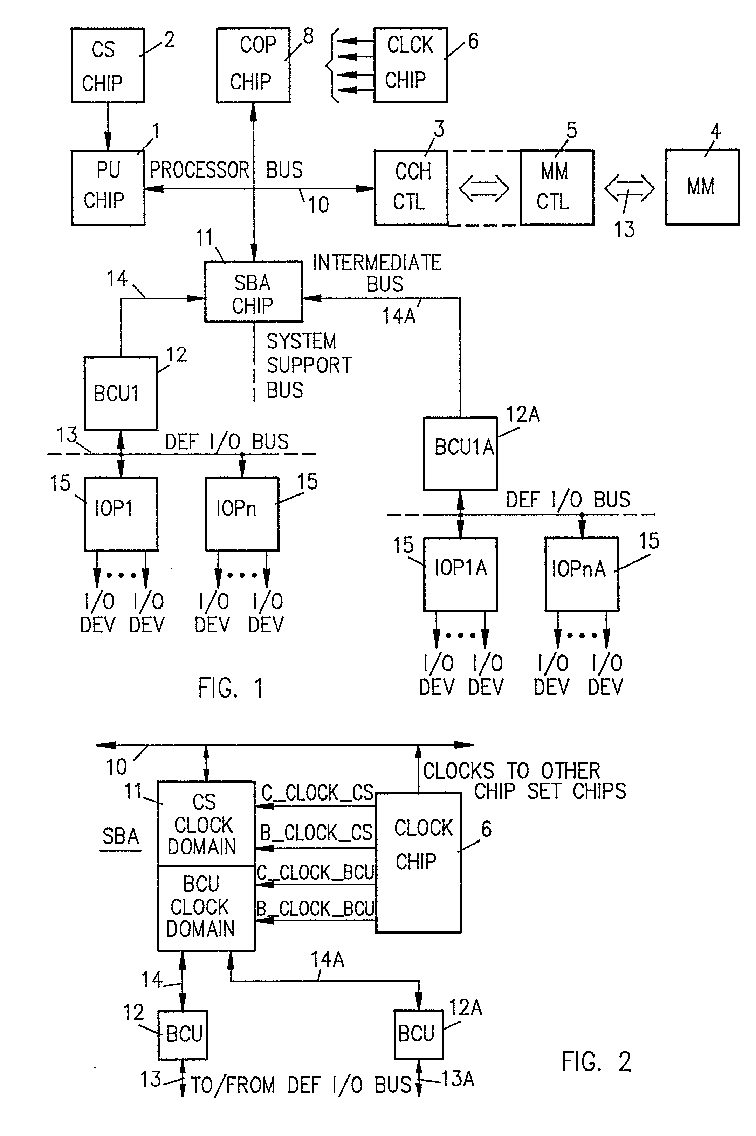

Fig. 1 shows in block representation a computer system which is set-up by single chips which form the members of a suitable chip set. A processor chip (PU) 1, is connected to a control store chip (CS) 2 in which the control program or in other words the micro program is stored. Faculatively, a co-processor chip (COP) 8 is provided for performing special functions such as floating point or graphic operations. Further, single chip 3 contains a cache (CCH) and a cache controller (CCH CTL), and Chip 5 is a main memory controller (MM CTL) which is used to control the operations of the main memory (MM) 4. Chips 1, 3, 4/5,8 and 11 are interconnected by a processor bus 10.

The system of Fig. 1 also has a clock chip (CLCK) 6 which provides all the timing which is required for the control of those chips which do not have clocking systems of their own and may provide maintenance and service functions in some computer systems.

The processor interface to the world of input-/output devices (I/O DEV) comprises a system bus adapter chip (SBA) 11 and one or more bus control units (BCU 1, BCU 1a) 12 and 12a which are not members of a chip set.

The input-/output processors 15 communicate with the system via one or more input-/output busses (DEF I/O BUS) 13 and 13a which are well defined with regard to the convention for data and control information exchange (bus protocol).

Finally the input-/output devices (I/O DEV) which represent printers, external storages like disk- or tape drives, terminals, a.s.o. are connected to individual input-/output processors 15 in which the device specific control programs are resident. In many cases the IOP's 15 have the same hardware structure (modular concept) but they contain, as said before, different control programs for the different I/O devices which are attached.

The circuit arrangement described below in more detail allows to run the system bus adapter 11 at the same or lower speed as the bus control units 12, 12a. For this purpose the following three cycle ratios are implemented: 1:1, 2:1 and 3:2.

These three cycle ratios can be used in different systems having bus adapters or controllers formed of single chips having different speed. It is this flexibility that provides the basis for using the same chip set in different computer systems and for saving costs thereby.

The cycle time of the bus control unit 12, 12a is determined by the timing requirements of the defended I/O bus 13, 13a and the protocol of the intermediate bus 14, 14a. If the resulting bus control unit speed does not match with the (technological) speed of the chip set then the system bus adapter 11 has to compensate this speed difference, and, as a consequence, an asynchronous data transfer protocol must be chosen.

For this purpose a special synchronization circuit is implemented within the system bus adapter chip 11 which allows to run the bus control units 12, 12a at a faster or (where adequate) at the same speed as the chip set and at the same time to meet the requirements of the intermediate bus 14, 14a protocol for proper data transfer.

In the example of Fig. 2 it is assumed that the BCU 12, 12a having its own clocking system was designed for a computer system which was developed and shipped earlier. However a new computer system formed by chips of a proper chip set has to make use of the same BCU 12, 12a to interface the defended I/O bus 13, 13a.

In order meet the requirements of the defined I/O to 13, 13a the slowest clock cycle is about 67 ns and the fastest BCU is designed for 50 ns this is the situation of the assumed example. This speed doesn't match in most chip set based systems with the speed of the chip set itself. Therefore, the special circuit which has to be implemented within the system bus adapter must enable a bus control unit 12, 12a to run at a faster speed and the chip set called system bus adapter 11 at a slower speed. For this purpose two clock domains are provided on the system bus adapter 11, the one running at chip set speed to communicate with the synchronous processor bus 10 and the other at BCU speed to comply with the intermediate bus 14, 14a protocol.

It is further assumed that the system internal logic is based on the level sensitive scan design rules (LSSD rules) which are described in the article "A Logic Design Structure for LSI Testability" By E.B. Aichelberger, Procedings of the Design Automation Conference, No. 14, 20-22 June 1977, New Orleans Luisiana, pp. 462-468. According to these design principals all internal latches have to be designed as master-slave latches which for the purpose of system initialization or testing can be connected in the form of shift registers. This is the reason that for each clock domain two clocks are needed, a C clock to clock all the master latches and a B clock to clock all the slave latches on the chip. These clocks are provided by the clock chip 6 which was mentioned earlier in connection with Fig. 1.

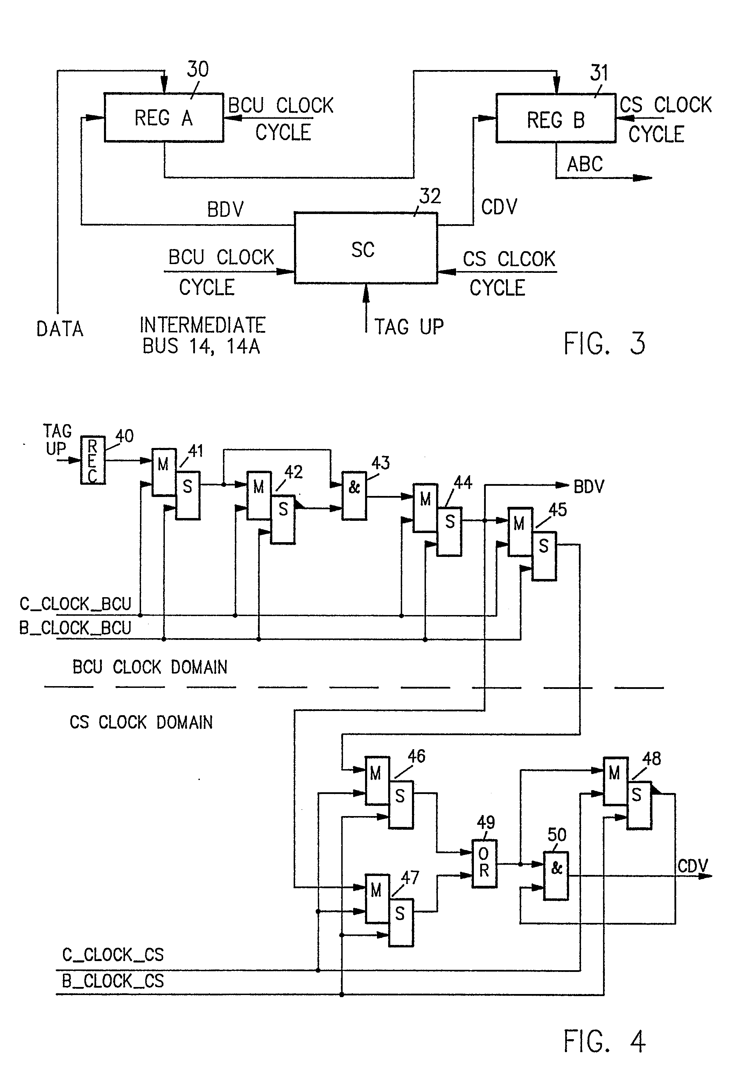

The protocol of the intermediate bus 14, 14a requires that the BCU and the intermediate bus interface logic run at the same clock cycle. Defined phase relationships for the clock connected to the BCU and the clock for the SBA clock domain realized within the SBA chip 11 are not required. A transfer of four bytes is started by the BCU by rasing a signal called TAG UP. This signal must be synchronized with both clocking domains within the SBA 11 by the said synchronization circuitry which is described in further detail in connection with Figs. 3 to 7.

As said before the BCU signals valid data on the intermediate bus 14, 14a by activating a data valid signal called TAG UP. In order to comply with the intermediate bus protocol the SBA 11 must synchronize the TAG UP signal which is asynchronous with the BCU's clock cycle frequency. The synchronous BCU data valid signal BDV latches data from the intermediate bus 14, 14a in register A (REG A) 30. The chip set (SBA) needs to have access to this data, otherwise a proper communication of data between SBA and BCU is not possible. However, this means that the data valid signal (TAG UP) has to be synchronized with the chip set clock cycle. The resulting synchronization signal is the CS data valid signal CDV which loads data from register A 30 into register B (REG B) 31. The chip set can access register B because it runs under control of the chip set clock cycle. So, the synchronization circuit (SC) 32 ensures that loading of register B is always followed by loading of register A to guarantee that data is transferred correctly from the BCU to the chip set (SBA).

The synchronization circuit SC 32 in Fig. 3 is shown in Fig. 4 with more details. The fundamental elements of the circuitry are LSSD polarity hold latches 41, 42, 44, 45, 46, 47 and 48 with ungated clocks. Ungated LSSD polarity hold latches comprise in general two latches a master latch M and a slave latch S, the latches being driven from different clocks the pulses of which may not overlap. The master latches are controlled by the pulses of the C clock and the slave latches by the pulses of the B clock. Each latch, master M or slave S have two inputs and one output. The output of the master latch M is connected to one of the inputs of the slave latch S. The input which is not connected to a clocking line is the data input, as can be seen in connection with the LSSD polarity hold latch 41. AND gate 43 is used to connect the output of latch 42 to the data input of latch 44. Further coupling elements are provided to connect latches 46 and 47 to latch 48. The coupling elements comprise OR gate 49 and AND gate 50.

The TAG UP signal is activated by the BCU and after the propagation delay time of the intermediate bus 14, 14a and the propagation delay time of receiver 40 on the SBA chip it is present at the data input of latch 41 which is activated thereby. To avoid metastable conditions in the logic circuits of the SBA the TAG UP signal will be synchronized by the latches 41, 42 and 44 which are clocked by the C/B clock BCU which run at the same speed as the BCU runs. Latch 42 is used to generated a one cycle pulse at the output of latch 44 which is called BDV (BCU data valid) and which was explained earlier in connection with Fig. 3. This signal is used as a control signal for gating data into register A 30 in connection with the C/B clock BCU signals. The output of latch 45 is active for one further cycle after the activation of the BDV signal.

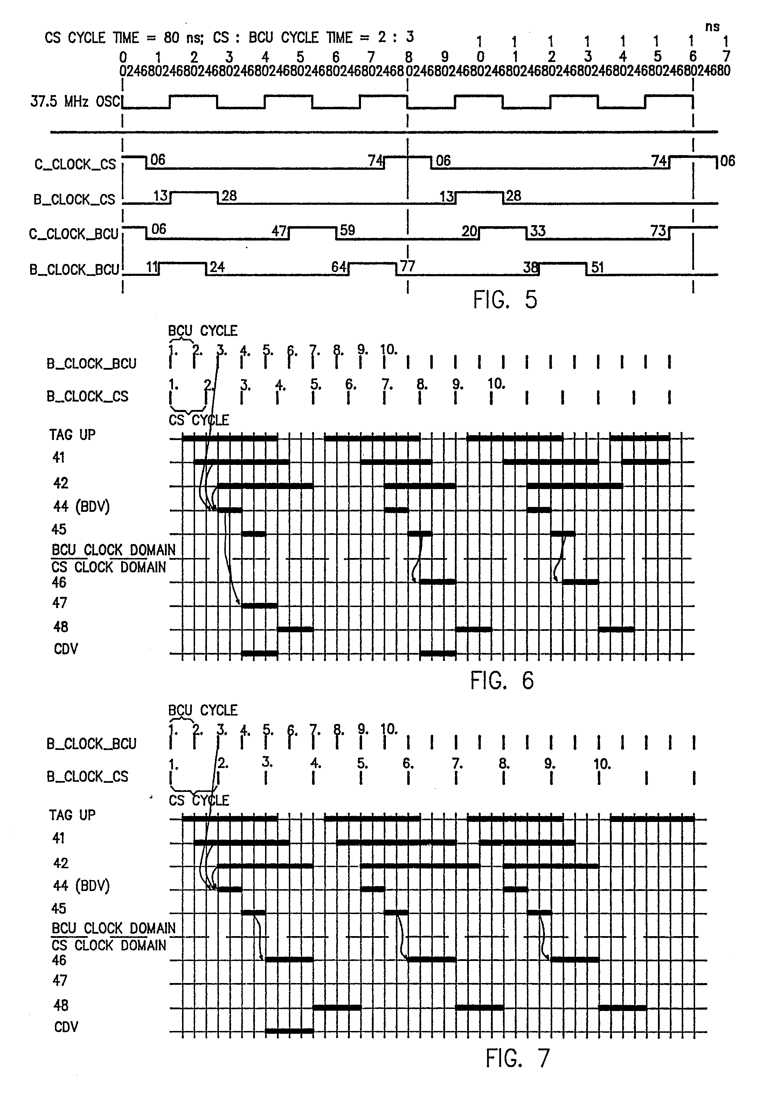

For synchronization with the chip set (CS) system the BDV signal is transferred to the data input of latch 47 whereas the output signal of latch 45 is coupled to the data input of latch 46. Now, the relationship of C/B clock BCU and C/B clock CS must be in such a manner that the active output signal of either latch 44 (BDV) or of latch 45 overlaps with a C clock CS pulse. Only this relationship can guarantee a error-free synchronization from the BCU clocking domain into the CS clocking demain. The amount of overlap must equal at least the worst case net delay of the output signal of latch 44 or latch 45 plus the latch set up time of either latch 46 or latch 47 (clock skew) not considered). This requires, however, a fixed phase relationship between the clocks C/B clock BCU and C/B clock CS as can be seen in Figs. 5, 6 and 7.

If for example the slave output signal of latch 44 is activated by the B clock BCU pulse starting at 64 ns (leading edge) (please refer to Fig. 5) the data input of latch 47 must be active at 86 ns (trailing edge of C clock CS) minus the latch set-up time (06, 2nd section).

So, the output signal of either latch 46 or 47 in connection with latch 48 generates a one cycle lasting pulse which is called CDV and which is used to gate register B 31 clocked with C/B clock CS and so to transfer data form register A 30 to register B 31. Now, data is available in the CS domain for further processing.

Fig. 6 shows an example where the clock cycle ratio is 3:2. In the top two lines only the B clock BCU and B clock CS pulse series are represented because the B clock pulses control the slave latches which generate the output signal of the polarity hold latch.

The next line below shows the appearance of the TAG UP signal which is generated every time when valid data are available from the BCU after being delayed by receiver 40. Polarity hold latch 41 is set by the trailing edge of next (second) B clock BCU cycle as the TAG UP signal lasts until the middle of the fifth cycle. The output signal which is generated by latch 41 is deactivated at the end of the fifth BCU cycle. The output of latch 42 is activated by the output signal of latch 41 and the third BCU cycle as can be seen in Fig. 6, fifth line from the top.

AND gate 43 which interconnects latches 42 and 44 has two inputs and one output. The one input is connected to the output of latch 41, the other input to the inverted output of latch 42. The inverted output is marked by a wedge. By the interconnection of AND gate 43 latch 44 can only be set when the output of latch 41 is active and the output of latch 42 is inactive. This relationship is shown in Fig. 6, sixth line from the top. Latch 44 generates the BDV signal which is active for exactly one BCU cycle because it is turned off by the inverted output signal of latch 42 and by the next pair of clock pulses. Polarity hold latch 45 is set and reset accordingly by the next pair of clock pulses.

As further can be seen from Fig. 6 the output signal of polarity hold latch 45 reflects the output signal of polarity hold latch 44, however, shifted by one cycle.

The output signals of polarity hold latches 44 and 45 are used to control that part of the circuit arrangement which is related to the CS clock domain. The output signal of polarity hold latch 45 directly controls polarity hold latch 46 in cooperation with the CS clock pulse pair. Fig. 6 shows that polarity hold latch 46 can be set the first time by the 8. CS clock pulse pair because it is the first time that the output signal of latch 45 coincides with the said clock pulse pair.

Polarity hold latch 47 can only be set by the third CS clock pulse pair because the following time conditions do not result into the required coincidence between an output signal of polarity hold latch 44 and a further pair of CS clock pulses.

Due to OR gate 49 polarity hold latch 48 is set whenever an output signal of polarity hold latch 46 or 47 coincide with a pair of CS clock pulses. The control signal CDV which is generated by AND gate 50 is dependent on the output signal of OR gate 49 and the inverted output of polarity hold latch 48. So, either polarity hold latch 46 or polarity hold latch 47 is set, thereby activating the CDV control signal via AND gate 50. The next CS clock pulse pair sets polarity hold latch 48. The inverted output signal of polarity hold latch 48 deactivates AND gate 50 and the CDV control signal. Thereby it is guaranteed that this CDV control signal is active for only one cycle.

In the same manner as Fig. 6 shows the timing chart for a clock pulse ratio of 3:2, Fig. 7 shows the timing for a 2:1 clock pulse ratio. As Fig. 7 is self-explanatory further remarks do not seem necessary.

The above described synchronization which is necessary when slower units (SBA) have to communicate with faster units (BCU), solve the problems which rise when data and/or control information has to be transferred from the faster unit to the slower one. Problems do not arise in the opposite direction of transfer. Existing bus protocols and standard synchronization circuits (two master/slave latches in series) are provided to detect valid data and to control the data and control information transfer from the slower unit to the faster one.

## Claims

1. Method of synchronizing asynchronous signals which are generated on different chips (BCU, SBA) having on-chip clocking systems with different speed for a transfer of data from a first (BCU) to second chip (SBA, CS), characterized in that the cycles of different clocking systems (BCU clock, CS clock) have a fixed phase relationship and a fixed cycle ratio (e.g. 1:1, 2:1, 3:2,...), the transmitting chip (BCU) indicates valid data for transmission by sending a data valid signal (TAG UP) to a synchronization circuit (SC), the synchronization circuit synchronizes the asynchronous data valid signal with the clock cycle (C/B clock BCU) of the transmitting chip and generates a first synchronization signal (BDV), the first synchronization signal is used to latch the data on a bus (14, 14a) connecting the chips into a first register (REG A) on the receiving chip in coincidence with the clock cycle of the transmitting chip, the synchronization circuit further synchronizes the data valid signal with the clock cycle (C/B clock CS) of the receiving chip and generates a second synchronization signal (CDV), the second synchronization signal is used to finally access the data in the first register and to latch these data in a second register (REG B) on the receiving chip in coincidence with the clock cycle of the receiving chip and the second register is used to provide the data under control of the clock cycles of the receiving chip for further processing.

2. Method of claim 1, characterized in that said fixed phase relationship is definded by the alignment of the trailing edges of the first pulse of each clock cycle of each of the chips (BCU; SBA, CS).

3. Method of claim 1 and 2, characterized in that said fixed cycle ratio is limited by the frequencies of the clock (BCU) clock; SBA, CS clock) of the first (BCU) and second chip (SBA, CS) which have the following relationship:
BCU clock frequency $\geq$ CS clock frequency,
the ratio being further limited to integers (e.g. 1:1, 2:1, 3:1, 3:2,...).

FIG. 1

FIG. 2

EP 0 375 794 A1

FIG. 3

FIG. 4

CS CYCLE TIME = 80 ns; CS : BCU CYCLE TIME = 2 : 3

37.5 MHz OSC

C_CLOCK_CS
B_CLOCK_CS
C_CLOCK_BCU
B_CLOCK_BCU

FIG. 5

BCU CYCLE

B_CLOCK_BCU
B_CLOCK_CS

CS CYCLE

TAG UP
41
42
44 (BDV)
45
BCU CLOCK DOMAIN
CS CLOCK DOMAIN
46
47
48
CDV

FIG. 6

BCU CYCLE

B_CLOCK_BCU
B_CLOCK_CS

CS CYCLE

TAG UP
41
42
44 (BDV)
45
BCU CLOCK DOMAIN
CS CLOCK DOMAIN
46
47
48
CDV

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 086 626  (CHUNG)<br>* Figures 1,2a; column 1, line 58 - column 2, line 24; column 3, line 54 - column 4, line 7 *<br>--- | 1-3 | G 06 F  15/00<br>G 06 F  13/42 |
| A | EP-A-0 283 115  (ADVANCED MICRO DEVICES INC.)<br>* Page 2, lines 9-27; page 4, line 25 - page 5, line 45; figures 4-6; page 11, line 45 - page 12, line 23 *<br>--- | 1-3 | |
| A | IBM TECHNICAL DISCLOSURE BULLETIN, vol. 21, no. 3, August 1978, page 1095, New York, US; A. BLUM: "Fast distribution of timing pulses by means of intermediate, presettable latches"<br>* Whole document *<br>--- | | |
| A | US-A-4 580 243  (R.E. RENNER et al.)<br>* Column 1, lines 6-35; column 2, line 52 - column 3, line 55; figure 2 *<br>----- | | |

TECHNICAL FIELDS SEARCHED (Int. Cl.5)

G 06 F  15/00
G 06 F  13/42

The present search report has been drawn up for all claims

| Place of search | Date of completion of the search | Examiner |
|---|---|---|
| THE HAGUE | 30-08-1989 | NGUYEN XUAN HIEP C. |

EPO FORM 1503 03.82 (P0401)